# EUROPEAN PATENT APPLICATION

(11) **EP 4 560 422 A1**
(43) Date of publication of application: **28.05.2025**
(21) Application number: 23842452.7
(22) Date of filing: 24.07.2023

(54) **AUTONOMOUS WORKING APPARATUS AND SYSTEM, AND CONTROL METHOD**

(30) Priority: 22.07.2022 CN 202210870782
(71) Applicant: Positec Power Tools (Suzhou) Co., Ltd., Suzhou, Jiangsu 215123 (CN)
(72) Inventor: WENG, Meng, Suzhou, Jiangsu 215123 (CN); LU, Shuailong, Suzhou, Jiangsu 215123 (CN); YANG, Shengcang, Suzhou, Jiangsu 215123 (CN); REN, Zhiguo, Suzhou, Jiangsu 215123 (CN); ZHA, Xiahong, Suzhou, Jiangsu 215123 (CN); LAN, Bincai, Suzhou, Jiangsu 215123 (CN)
(74) Representative: Kilburn & Strode LLP
(86) International application number: PCT/CN2023/108919
(87) International publication number: WO 2024/017390

(57) **Abstract**

This application provides an autonomous working apparatus and system and a control method. The autonomous working apparatus is adapted to perform at least one working task in a working area. The foregoing control method includes: obtaining at least one working parameter when the autonomous working apparatus performs a current working task; determining, according to the at least one working parameter, whether the autonomous working apparatus needs to return to a preset parking position located outside the working area, and if a determining result is yes, controlling the autonomous working apparatus to travel to a preset position to wait for a user operation to be applied, where the preset parking position is different from the preset position; and enabling the autonomous working apparatus to return to the preset parking position based on the applied user operation, and switching to a state of waiting to perform a next working task or shutting down. **In** this way, the autonomous working apparatus is enabled to return to the preset parking position in a safer traveling environment and/or a safer traveling state, thereby ensuring pedestrian safety.

## Description

### TECHNICAL FIELD

The present disclosure relates to the field of autonomous working apparatus technologies, and specifically, to an autonomous working apparatus and system and a control method.

### BACKGROUND

A commercial team providing a mowing service needs to drive a transport vehicle to transport a riding lawn mower or a standing lawn mower near lawns in different homes and then manually drive the lawn mower to enter the lawns for mowing. This inevitably increases labor costs. In addition, such machines also have a requirement on driving skills of an operator, which tends to cause unstable working efficiency and cutting quality.

### SUMMARY

In view of this, embodiments of the present disclosure are intended to provide an autonomous working apparatus, an autonomous working system, and a control method. The following mainly describes several aspects of this application.

According to a first aspect, a control method for an autonomous working apparatus is provided, the autonomous working apparatus is adapted to perform at least one working task in a working area. The method includes:
obtaining at least one working parameter when the autonomous working apparatus performs a current working task;
determining, according to the at least one working parameter, whether the autonomous working apparatus needs to return to a preset parking position located outside the working area, and if a determining result is yes, obtaining position data of at least one preset position, and controlling the autonomous working apparatus to travel to the at least one preset position to wait for a user operation to be applied, where the preset parking position is different from the preset position; and
enabling the autonomous working apparatus to return to the preset parking position based on the applied user operation, and switching to a state of waiting to perform a next working task or shutting down.

In the foregoing control method, the autonomous working apparatus is enabled to pass at least one preset position before returning to the preset parking position and wait for a user operation at the preset position, so that the autonomous working apparatus returns to the preset parking position in a safer traveling environment and/or a safer traveling state, thereby ensuring pedestrian safety.

According to a second aspect, a control method for an autonomous working apparatus is provided, the autonomous working apparatus is adapted to perform at least one working task in a working area. The method includes: obtaining position data of an entry position when the autonomous working apparatus enters the working area; obtaining at least one working parameter when the autonomous working apparatus performs a current working task; and determining, according to the at least one working parameter, whether a user operation needs to be applied to the autonomous working apparatus, and if a determining result is yes, controlling the autonomous working apparatus to travel to the entry position to wait for the user operation to be applied.

According to a third aspect, a control method for an autonomous working apparatus is provided, the autonomous working apparatus is adapted to perform at least one working task in a working area. The method includes: obtaining position data of a plurality of preset positions, where the autonomous working apparatus waits at the preset positions for a user operation to be applied; obtaining at least one working parameter when the autonomous working apparatus performs a current working task; and determining, according to the at least one working parameter, whether a user operation needs to be applied to the autonomous working apparatus, and if a determining result is yes, controlling the autonomous working apparatus to travel to one preset position in the plurality of preset positions to wait for the user operation to be applied.

According to a fourth aspect, an autonomous working apparatus is provided. The autonomous working apparatus is adapted to perform at least one working task in a working area, and includes: a body; and a working assembly, a driving assembly, and a sensor assembly that are connected to the body, where the sensor assembly is at least configured to obtain positioning data of the autonomous working apparatus, where the autonomous working apparatus further includes a control circuit, the control circuit is coupled to the working assembly, the driving assembly, and the sensor assembly, and is configured to perform a control process, and the control process includes: obtaining at least one working parameter when the autonomous working apparatus performs a current working task; determining, according to the at least one working parameter, whether the autonomous working apparatus needs to return to a preset parking position located outside the working area, and if a determining result is yes, controlling the autonomous working apparatus to travel to a preset position to wait for a user operation to be applied, where the preset parking position is different from the preset position; and enabling the autonomous working apparatus to return to the preset parking position based on the applied user operation, and switching to a state of waiting to perform a next working task or shutting down.

According to a fifth aspect, an autonomous working apparatus system is provided. The system includes: the autonomous working apparatus according to the fourth aspect; a terminal, communicatively connected to the autonomous working apparatus; and a server, communicatively connected to the autonomous working apparatus and the terminal, and configured to store map data of different working areas, to send map data of a working area of a working task to be performed to the autonomous working apparatus and/or the terminal.

According to a sixth aspect, a computer-readable storage medium is provided. The computer-readable storage medium stores executable code, and the executable code, when being executed, can implement the method according to any aspect of the first aspect to the third aspect.

### BRIEF DESCRIPTION OF THE DRAWINGS

FIG. 1 is a schematic diagram of transfer of an autonomous working apparatus between different working areas;
FIG. 2 is a schematic structural diagram of an autonomous working apparatus according to an embodiment of this application;
FIG. 3 is a schematic diagram of entry of an autonomous working apparatus according to an embodiment of this application;
FIG. 4 is a schematic diagram of return of a first part of an autonomous working apparatus according to an embodiment of this application;
FIG. 5 is a schematic diagram of return of a second part of an autonomous working apparatus according to an embodiment of this application;
FIG. 6 is a schematic diagram of traveling of an autonomous working apparatus for replenishing electricity according to an embodiment of this application;
FIG. 7 is a schematic diagram of traveling of an autonomous working apparatus continuing to perform a working task after electricity is replenished according to an embodiment of this application;
FIG. 8 is a schematic diagram of return of an autonomous working apparatus after electricity is replenished and a current working task is completed according to an embodiment of this application;
FIG. 9 is a schematic diagram of entry of an autonomous working apparatus according to an embodiment of this application;
FIG. 10 is a schematic diagram of return of a first part of an autonomous working apparatus according to an embodiment of this application;
FIG. 11 is a schematic diagram of return of a second part of an autonomous working apparatus according to an embodiment of this application; and
FIG. 12 is a schematic diagram of traveling for replenishing electricity of an autonomous working apparatus according to an embodiment of this application.

### DETAILED DESCRIPTION

The following clearly and completely describes the technical solutions in the embodiments of the present disclosure with reference to the accompanying drawings in the embodiments of the present disclosure. Apparently, the described embodiments are only some embodiments of the present disclosure rather than all the embodiments.

With the rapid development of science and technology, intelligent control technologies are increasingly widely applied to people's life. As an intelligent product derived from an intelligent control technology, an autonomous working apparatus can bring convenience and ease to people's life. Therefore, the autonomous working apparatus is frequently used in people's life.

Generally, the autonomous working apparatus is an apparatus having an automatic traveling function in some embodiments, and is configured to perform a working task in an automatic traveling process. A plurality of types of autonomous working apparatuses are provided in some embodiments, which is not limited in the embodiments of the present disclosure. For example, the autonomous working apparatus is an automatic lawn mower, an automatic snowplow, an automatic watering machine, an automatic leaf blower, an automatic sweeper, a mopping robot, a sweeping and mopping robot, or the like in some embodiments. Further, the autonomous working apparatus is adapted to perform one or more working tasks in a working area. For example, when the autonomous working apparatus is an automatic lawn mower, the autonomous working apparatus is configured to perform a mowing task in a working area. For another example, when the autonomous working apparatus is an automatic snowplow, the autonomous working apparatus is configured to perform a snowplowing task in a working area. For still another example, when the autonomous working apparatus is an automatic watering machine, the autonomous working apparatus is configured to perform a watering task in a working area. For still another example, when the autonomous working apparatus is an automatic leaf blower, the autonomous working apparatus is configured to perform a leaf blowing task in a working area. For still another example, when the autonomous working apparatus is an automatic sweeper, the autonomous working apparatus is configured to perform a sweeping task in a working area. For still another example, when the autonomous working apparatus has both a cutting assembly and a watering assembly, the autonomous working apparatus is configured to perform a mowing task in the working area, a watering task in the working area, and the like.

However, the foregoing gardening robot that can work autonomously is currently mainly applied to the household field, and a gardening robot that adopts intelligent control is rarely seen in the commercial field.

In the commercial field, a commercial team usually drives and carries a transport vehicle with lawn mowers and other gardening tools in a day according to scheduled orders to go to different user homes for lawn maintenance, including many jobs such as mowing, trimming, pruning, and leaf blowing. These jobs usually need to be manually completed by workers, resulting in high labor expenditure for the team. In addition, factors such as weather, terrain, and vegetation distribution and growth all affect operating time of the team. A longer operating time leads to higher labor expenditure of the commercial team. In addition, for a riding lawn mower or a standing lawn mower, driving skills of different people in a commercial team also vary, which tends to cause unstable working efficiency and cutting quality.

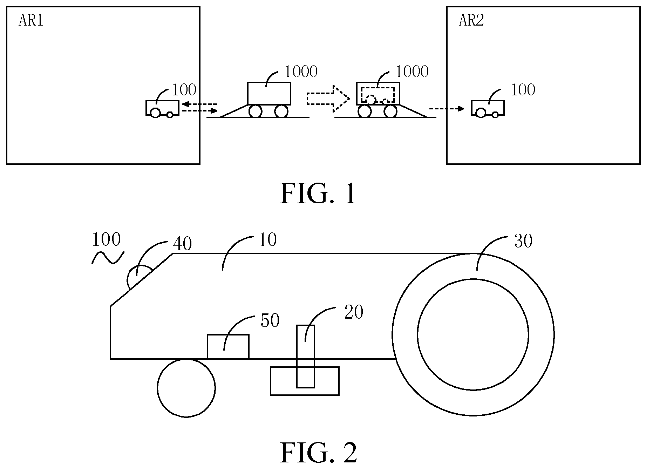

Therefore, if a commercial team uses a gardening robot that is configured to work autonomously, labor expenditure can be greatly reduced. However, as shown in FIG. 1, such a gardening robot 100 needs to enter corresponding working areas AR1 and AR2 from a transport vehicle 1000, and after completing a working task, the gardening robot 100 drives away from the working area to return to the transport vehicle 1000. How to ensure the safety of a gardening robot during traveling in the process is a problem that urgently needs to be resolved at present.

Embodiments of this application provide an autonomous working apparatus. When needing to return to a transport vehicle, the autonomous working apparatus first returns to a preset position, and waits at the preset position for a user to apply an operation, to return to the transport vehicle in a relatively safe traveling environment and/or traveling state (for example, a state in which the user controls traveling), thereby ensuring pedestrian safety.

It is to be understood that if the autonomous working apparatus directly returns to the transport vehicle automatically without waiting for the user to apply an operation, a safety risk still exists because a traveling environment is not confirmed and it fails to be ensured that the autonomous working apparatus returns in a relatively safe traveling state. In addition, if the autonomous working apparatus chooses to wait for the user to apply an operation instead of returning to the preset position (for example, the autonomous working apparatus travels to the position of the user or waits in situ for the user to come over to perform an operation), an additional processing time is further consumed, affecting working efficiency of a commercial team.

In some embodiments of this application, the autonomous working apparatus acquires environmental information and/or positioning information through a sensor, and transmits the environmental information and/or positioning information to a control circuit for analysis and processing by the control circuit to generate instructions that are configured for controlling a working assembly and a driving assembly to act, thereby enabling autonomous working in different working areas and reducing labor costs.

In some embodiments of this application, position data of the preset position for the autonomous working apparatus to return first after a working task is completed is acquired in advance in some embodiments. For example, position data of one or more positions is acquired in advance as the position data of the preset position in some embodiments. Further, when the position data of the plurality of positions is acquired as the position data of the preset position, the user selects a preset position to return to during subsequent use in some embodiments, or the autonomous working apparatus selects an appropriate preset position to return to according to a distance in some embodiments. In the foregoing manner, when needing to be operated by the user, the autonomous working apparatus autonomously travels to the preset position in some embodiments. After receiving an operation prompt, the user travels to the preset position in some embodiments, thereby shortening an interaction time and improving working efficiency.

Optionally, the preset position is set by acquiring position data of an appropriate position in advance according to a surrounding environment of a working area in some embodiments. For example, for a home lawn, a position in a home driveway near the home lawn or a position near a boundary connecting a home driveway and the lawn is selected in some embodiments. In this way, it is ensured that the autonomous working apparatus has a relatively broad traveling environment, and traveling safety of the autonomous working apparatus is improved. In another aspect, a plurality of preset positions are provided. In other words, position data of a plurality of appropriate positions (which is, for example, the foregoing positions having a relatively broad traveling environment in some embodiments) is acquired in advance according to a surrounding environment of a home working area for setting in some embodiments. In this way, it is not necessary to return to a fixed position every time, thereby helping to avoid lawn wear.

Optionally, the preset position is determined according to a position at which the autonomous working apparatus is located when the autonomous working apparatus travels into the working area in some embodiments. In this way, the autonomous working apparatus is allowed to return to the transport vehicle substantially along an original entry path, thereby improving traveling safety of the autonomous working apparatus. In another aspect, position data of an entry position is recorded when the autonomous working apparatus enters the working area, and it is not necessary to additionally select another position for interaction, which simplifies steps, and makes it convenient for personnel of a commercial team to place objects such as a carried battery pack near the entry position after entry instead of carrying the objects all the way burdensomely. In addition, when the user controls the autonomous working apparatus to drive into the working area, the entry position of the autonomous working apparatus each time the autonomous working apparatus drives into the working area is random in some embodiments, i.e., the autonomous working apparatus does not need to return to a fixed entry position each time, thereby helping to avoid lawn wear.

In some embodiments of this application, the operation that the autonomous working apparatus waits at the preset position for the user to apply includes opening a seat plate to sit, pressing a key to confirm return after a traveling environment is confirmed, manually driving the machine to return, and the like. Based on the foregoing operations, it is beneficial to provide a relatively safe traveling environment and/or traveling state for the autonomous working apparatus, thereby ensuring traveling safety of the autonomous working apparatus and ensuring pedestrian safety.

An autonomous working apparatus provided in embodiments of this application is described below in detail with reference to the accompanying drawings.

In an embodiment, referring to FIG. 2, an autonomous working apparatus 100 includes a body 10, a working assembly 20, a driving assembly 30, and a sensor assembly 40 that are connected to the body 10, and a control circuit 50 that is coupled to the working assembly 20, the driving assembly 30, and the sensor assembly 40 in some embodiments. The assemblies (or components) included in the autonomous working apparatus 100 are respectively described below.

The body 10 includes a housing and a chassis of the autonomous working apparatus 100 in some embodiments, and is mainly configured to mount the working assembly 20, the driving assembly 30, the sensor assembly 40, and an interaction assembly (i.e., a button, a key, or a touch panel) in some embodiments. In some implementations, the body 10 further includes a shield for protection (to avoid human injury) and/or an anti-collision member for cushioning a collision in some embodiments.

The working assembly 20 includes a driving engine and a working head connected to an output shaft of the driving engine in some embodiments. Various types of working heads are used in some embodiments, and are, for example, a mowing working head, a blowing working head, a snowplowing working head, a trimming working head, a watering working head, a sweeping working head, and the like in some embodiments, and are correspondingly configured to perform a mowing task, a leaf blowing task, a snowplowing task, a trimming task, a watering task, a sweeping task, and the like in some embodiments. The mowing working head is further provided with a grass crushing component in some embodiments, and the snowplowing working head is further provided with a snow blowing component in some embodiments. In other words, the working head is further provided with a subcomponent for optimizing working performance. Optionally, the working assembly 20 is detachably connected to the body, so that a corresponding working head is configured to be matched to perform work according to a task scenario.

The driving assembly 30 includes an engine, a motor, or another driving component, and a moving component connected to such a driving component in some embodiments. The driving assembly 30 drives, according to a driving instruction by using the driving component, the moving component to move to drive the autonomous working apparatus 100 to move in some embodiments. For example, the moving component is generally mounted at the bottom of the autonomous working apparatus 100 in some embodiments, and includes a universal wheel, a driving wheel, and the like in some embodiments. When the moving component includes a universal wheel, the universal wheel is configured to change a traveling direction of the autonomous working apparatus 100 in some embodiments. The universal wheel is mounted at a position at a bottom front end (a front end of a moving direction of the autonomous working apparatus 100) of the autonomous working apparatus 100 in some embodiments. When the moving component includes a driving wheel, the driving wheel is configured to drive the autonomous working apparatus 100 to move in some embodiments, and the driving wheel is mounted at a bottom side position of the autonomous working apparatus 100 in some embodiments.

The sensor assembly 40 is configured to acquire information, for example, acquire position information of the autonomous working apparatus 100 or environmental information of an environment in which the autonomous working apparatus 100 is located, in some embodiments. A plurality of types of sensor assemblies 40 are included in some embodiments, which is not limited in the embodiments of this application. For example, the sensor assembly 40 includes, but is not limited to, an ultrasonic sensor, an infrared sensor, a visual sensor, a laser sensor, an image sensor, and a satellite positioning sensor in some embodiments.

The control circuit 50 is coupled to the working assembly 20, the driving assembly 30, and the sensor assembly 40 in some embodiments, for example, is electrically connected in some embodiments, communicatively connected in some embodiments, or partially mechanically connected in some embodiments, provided that required signals (which are referred to as data or instructions in some embodiments) are transmitted between the control circuit 50 and these assemblies. For example, the control circuit 50 is connected to these assemblies directly in some embodiments, or connected indirectly through an intermediate medium in some embodiments, forms a connection through an internal element in some embodiments, or the like. It is to be understood that, in addition to a control function, the control circuit 50 further has functions such as recognition, analysis, modulation/demodulation, and determination that need to be implemented in advance to implement the control function in some embodiments. Correspondingly, the control circuit 50 includes a controller in some embodiments, or includes a recognition unit, a path planning unit, an analysis unit, a modulation/demodulation unit, a determination unit, and the like in some embodiments. These unit elements are partially or completely integrated into the control circuit 50 in some embodiments, or are separately disposed in the control circuit 50 in some embodiments.

The control circuit 50 is configured to execute a control procedure in some embodiments. When the control procedure is implemented, the autonomous working apparatus 100 implements the following steps:
S100: Obtain at least one working parameter when the autonomous working apparatus 100 performs a current working task.

In some implementations of this embodiment, the obtained at least one working parameter includes at least one of an execution progress, a driving power, a traveling speed, a workload, a remaining battery level, or a map parameter of the current working task. For example, the execution progress of the current working task is represented by a coverage rate of a working area by the autonomous working apparatus 100 in some embodiments, or is represented by a traveling progress of a planned working path in some embodiments. For example, the map parameter is used for determining whether a new map is inputted/loaded in some embodiments. For example, the map parameter is a quantity of maps downloaded, a map receiving progress, a map downloading progress, or the like in some embodiments.

In some implementations of this embodiment, the autonomous working apparatus 100 obtains the foregoing working parameter in real time in some embodiments, for example, obtains the foregoing working parameter every 50 ms, 100 ms, 500 ms, 1 s, or 2 s in some embodiments, so that it is monitored in real time whether the autonomous working apparatus 100 needs to return to a preset parking position.

In some implementations of this embodiment, some working parameters need to be obtained in real time, and some other working parameters do not need to be obtained in real time. For example, the execution progress, the workload, and the remaining battery level of the current working task need to be obtained in real time, and the map parameter is obtained after it is determined that the execution progress of the current working task meets a condition in some embodiments.

S200: Determine, according to the at least one working parameter, whether the autonomous working apparatus 100 needs to return to a preset parking position located outside the working area, and if a determining result is yes, control the autonomous working apparatus 100 to travel to a preset position to wait for a user operation to be applied, where the preset parking position is different from the preset position.

It should be understood that the preset parking position and the preset position are two different positions. Optionally, the preset position is inside the working area in some embodiments, is outside the working area (for example, an internal driveway of a home) in some embodiments, or is at a boundary of the working area in some embodiments. Optionally, the preset parking position is in an internal driveway of a home in some embodiments, or is in a public area outside a home in some embodiments. Optionally, the preset parking position is a parking position in a carriage of a transport vehicle near the working area in some embodiments, or is a parking position in a charging station arranged outside the working area in some embodiments. The transport vehicle transports the autonomous working apparatus 100 to a different working area (including working areas in different regions) to perform a working task in some embodiments.

In some implementations of this embodiment, the preset position is acquired in advance by a commercial team and stored in a memory in some embodiments, and is available for being invoked at any time when the autonomous working apparatus 100 needs to be used. In addition, as described above, one or more preset positions are provided in some embodiments. For example, the memory is a local memory in some embodiments, for example, is a memory in the autonomous working apparatus 100 in some embodiments, or is mounted in a virtual server by using a cloud storage technology (e.g., in a cloud disk form) in some embodiments.

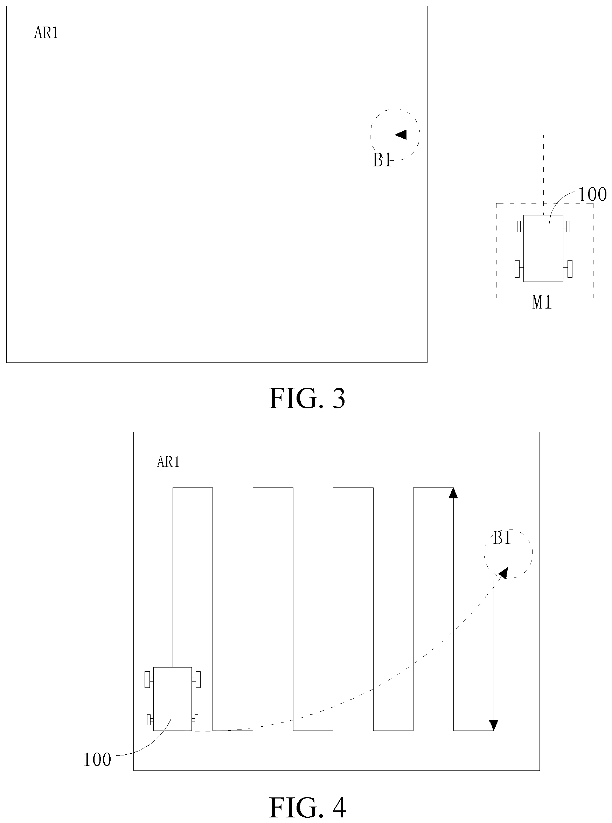

Optionally, the condition under which the autonomous working apparatus 100 needs to return to the preset parking position is that the current working task is completed in some embodiments, and the correspondingly obtained working parameter is the execution progress of the current working task in some embodiments. For example, as shown in FIG. 4, in some embodiments, when an execution progress of a current task (for example, the coverage rate of the working area or the traveling progress of the planned path) is 100%, it is confirmed that the autonomous working apparatus 100 needs to return to a preset parking position B1, and position data of a preset position B1 is available for being invoked to control the autonomous working apparatus 100 to first travel to the preset position B1 to wait for a user operation and then return to the preset parking position based on the applied user operation in some embodiments.

Optionally, the condition under which the autonomous working apparatus 100 needs to return to the preset parking position is that the current working task is completed and no other map data is inputted/loaded in some embodiments, and the correspondingly obtained working parameter is the execution progress of the current working task and the map parameter described above in some embodiments. For example, when the autonomous working apparatus 100 detects that the current working task is completed and no other map data is inputted/loaded, it is confirmed that no area in which the autonomous working apparatus 100 needs to work exists in a current region in some embodiments, so that position data of the preset position is available for being invoked to control the autonomous working apparatus 100 to first travel to the preset position to wait for a user operation in some embodiments, then the autonomous working apparatus 100 returns to the carriage of the transport vehicle, and then the autonomous working apparatus 100 is transported to a next region through the transport vehicle for work.

Optionally, the condition under which the autonomous working apparatus 100 needs to return to the preset parking position is that the autonomous working apparatus 100 needs to return to the preset parking position outside the working area to replenish electricity in some embodiments, and the correspondingly obtained working parameter is the remaining battery level of the autonomous working apparatus 100 in some embodiments. For example, in some embodiments, when it is detected that the remaining battery level is less than or equal to a predetermined value, it is confirmed that the autonomous working apparatus 100 needs to return to the preset parking position for charging, and position data of the preset position is available for being invoked to control the autonomous working apparatus 100 to first travel to the preset position to wait for a user operation and then return to the preset parking position based on the applied user operation in some embodiments.

In some implementations of this embodiment, as shown in FIG. 3, the preset position is recorded when the autonomous working apparatus 100 enters the working area in some embodiments, i.e., an entry position B1 when the autonomous working apparatus 100 enters a working area AR1 from a preset parking position M1 outside the working area is used as the preset position. Further, when the autonomous working apparatus 100 obtains positioning data with higher accuracy through course calibration near an entry area, a position at which the autonomous working apparatus 100 completes course calibration is alternatively used as the preset position in some embodiments.

In some implementations of this embodiment, position data of the one or more preset positions is acquired in advance in some embodiments, or an entry position of the autonomous working apparatus 100 is used as one of the preset positions in some embodiments. In this way, the autonomous working apparatus 100 is prevented from returning to a fixed preset position each time, thereby reducing lawn wear.

In some implementations of this embodiment, at least one preset position is located inside and/or at a boundary of the working area. In this way, the autonomous working apparatus 100 is prevented from traveling outside the working area when performing the current working task, thereby further improving the safety of the autonomous working apparatus 100.

S300: Enable the autonomous working apparatus 100 to return to the preset parking position based on the applied user operation, and switch to a state of waiting to perform a next working task or shutting down.

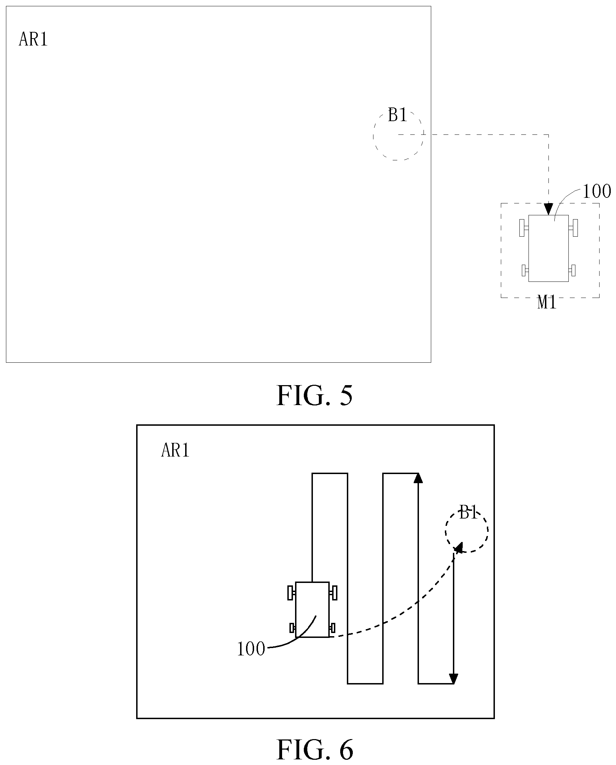

In some implementations of this embodiment, as shown in FIG. 5, the autonomous working apparatus 100 returns to the preset parking position M1 based on an applied user operation. Specifically, at least the following three manners are included:
(1) Return in an automatic mode: After a user manually confirms at the preset position that return is allowed, the autonomous working apparatus 100 autonomously returns to the preset parking position M1 from the preset position B1.
   For example, at the preset position, after confirming that a traveling environment is safe, the user enters an instruction for confirming return to the autonomous working apparatus 100 in some embodiments, and based on the instruction, the control circuit 50 controls the autonomous working apparatus 100 to autonomously return to the preset parking position. Optionally, the interaction assembly (e.g., a button, a key, or a touch panel) is arranged on the autonomous working apparatus 100 in some embodiments to make it convenient for the user to enter the instruction for confirming return. Certainly, the user alternatively sends the instruction for confirming return to the autonomous working apparatus 100 through an APP at the preset position in some embodiments.
(2) Return in a manual mode: The autonomous working apparatus 100 returns to the preset parking position M1 from the preset position B1 under control of the user.
   For example, at the preset position, the user enters an instruction for confirming to switch to the manual mode to the autonomous working apparatus 100 in some embodiments, so that in the manual mode, the autonomous working apparatus 100 returns to the preset parking position M1 based on control of the user in some embodiments. Optionally, a joystick is arranged on the autonomous working apparatus 100 in some embodiments, so that in the manual mode, the user rides on the autonomous working apparatus 100 and controls the autonomous working apparatus 100 to return to the preset parking position M1 by using the joystick. Optionally, in the manual mode, the user remotely controls the autonomous working apparatus 100 to return to the preset parking position M1 by using a remote control in some embodiments.
(3) Return through a combination of the manual mode and the automatic mode: The autonomous working apparatus 100 travels near the preset parking position M1 from the preset position B1 under control of the user, then the user switches from the manual mode to the automatic mode, and finally the autonomous working apparatus 100 autonomously returns to the preset parking position M1.

For example, at the preset position, the user enters an instruction for confirming to switch to the manual mode to the autonomous working apparatus 100 in some embodiments, so that in the manual mode, the autonomous working apparatus 100 travels near the preset parking position M1 based on control of the user in some embodiments. Next, the user enters an instruction for confirming to switch to the automatic mode to the autonomous working apparatus 100 in some embodiments, so that the autonomous working apparatus 100 autonomously returns to the preset parking position M1 based on the instruction. Optionally, the interaction assembly and the joystick (or the remote control in some embodiments) described above are arranged in the autonomous working apparatus 100 in some embodiments.

In summary, in the foregoing manner, the autonomous working apparatus 100 is enabled to pass at least one preset position before returning to the preset parking position and wait for a user operation at the preset position, so that the autonomous working apparatus 100 returns to the preset parking position in a safer traveling environment and/or a safer traveling state, thereby ensuring pedestrian safety.

Some implementations that are usable by the autonomous working apparatus 100 in the foregoing embodiment are further provided below.

In some implementations, before the autonomous working apparatus 100 performs the working task, when implementing the control procedure in this embodiment, the control circuit 50 further implements the following steps: obtaining map data of the working area, where the map data of the working area includes position data of the at least one preset position. In other words, the position data of the preset position is included in a map data package of the working area in some embodiments, so that the position data of the preset position is synchronously obtained when the autonomous working apparatus 100 obtains a map of the working area, thereby improving working efficiency.

Optionally, in some embodiments, the obtaining map data of the working area includes: acquiring position data of a boundary of the working area and the position data of the at least one preset position; and generating the map data according to the acquired position data. In other words, the position data of the preset position is also acquired in advance in a process of acquiring a boundary of the working area in some embodiments, so that the preset position is also included in a generated map of the working area and is downloaded together with the map in some embodiments, to facilitate subsequent obtaining of the position data of the preset position.

Optionally, in some embodiments, the obtaining map data of the working area includes: acquiring position data of a boundary of the working area and position data of a guide line or a guide area for guiding the autonomous working apparatus 100 to travel into the working area from outside the working area, where the position data of the guide line or the guide area includes the position data of the at least one preset position; and generating the map data according to the acquired position data. Through the guide line or the guide area, in one aspect, the autonomous working apparatus 100 is guided to enter the working area in some embodiments, thereby implementing an autonomous entry function of the autonomous working apparatus 100. In another aspect, one or more pieces of data in the position data of the guide line or the guide area is used as the position data of the preset position in some embodiments, so that the position data of the preset position is synchronously obtained directly when the map data of the working area is obtained without additionally acquiring position data of another position (used as the preset position) or adding an additional step of obtaining the preset position in some embodiments, which helps to improve working efficiency.

In some implementations, the at least one working parameter includes the remaining battery level of the autonomous working apparatus 100, and when the foregoing control procedure is implemented, the autonomous working apparatus 100 further implements the following steps: determining, according to the remaining battery level of the autonomous working apparatus 100, whether the autonomous working apparatus 100 needs to replenish electricity, and if a determining result is yes, controlling the autonomous working apparatus to travel to the at least one preset position to wait for the user to replenish electricity. In this implementation, as shown in FIG. 6, electricity is replenished at the preset position B1 instead of the preset parking position. Because the preset position B1 is selected in advance according to a surrounding environment of a home and is relatively broad, replenishment of electricity at the preset position B1 helps to improve traveling safety during replenishment of electricity and movement. Optionally, it is determined whether the remaining battery level is less than or equal to a battery level threshold to confirm whether electricity needs to be replenished in some embodiments. The battery level threshold is 25%, 20%, 15%, or the like of a total battery level in some embodiments. In addition, it should be noted that if the battery level threshold is high, traveling to the preset position for replenishment of electricity tends to be frequent, which affects working efficiency. If the battery level threshold is low, electricity tends to be exhausted during traveling to the preset position, which also affects working efficiency, and is also likely to affect component performance and the service life of the apparatus. Therefore, an appropriate battery level threshold is determined according to an actual size of the working area in some embodiments. Optionally, the operation of replenishing electricity includes changing a battery pack in some embodiments, or is connecting the autonomous working apparatus 100 to an external energy device for charging in some embodiments.

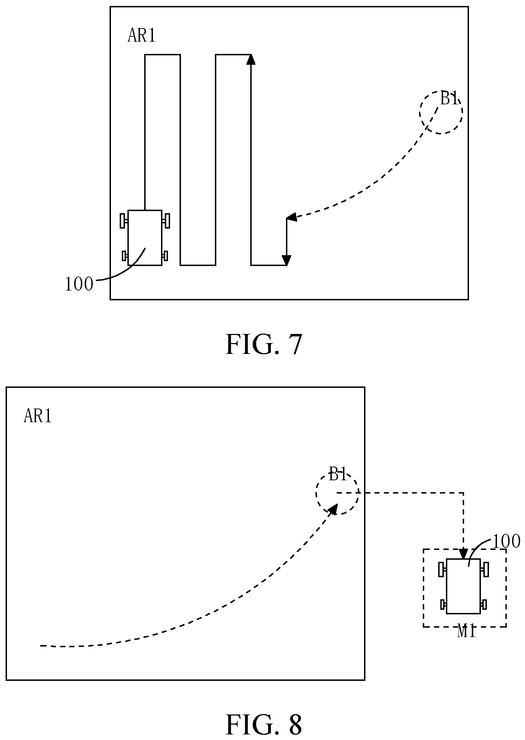

Further, when the foregoing control procedure is implemented, in some embodiments, the autonomous working apparatus 100 further implements the following steps: receiving an instruction entered by the user to end replenishment of electricity; and controlling the autonomous working apparatus 100 based on the instruction to drive away from the at least one preset position and continue to perform the current working task. In this implementation, as shown in FIG. 7, after completing the operation of replenishing electricity at the preset position B1, the user interacts with the autonomous working apparatus 100 to confirm that replenishment of electricity is completed in some embodiments, and the autonomous working apparatus 100 starts a procedure of continuing to work, travels from the preset position B1 to a position at which work is originally suspended to return for replenishment of electricity, and then continues to perform the current working task. Optionally, in a process of replenishing electricity, if power-off is required, position data of a suspension position and some working parameters (e.g., the driving power and a height of the working head) during the execution of the current working task are pre-stored before power-off in some embodiments, so that the foregoing data is available for being invoked after the autonomous working apparatus 100 is powered on again in some embodiments, to ensure continued execution of the current working task.

Further, as shown in FIG. 8, after continuing to perform the current working task and completing the current working task, the autonomous working apparatus 100 returns to the preset position B1 again to wait for a user operation, to return to the preset parking position M1 outside the working area in a safer traveling environment and/or traveling state.

In another embodiment, an autonomous working apparatus includes a body, a working assembly, a driving assembly, and a sensor assembly that are connected to the body, and a control circuit that is coupled to the working assembly, the driving assembly, and the sensor assembly. For arrangement of components in the driving assembly, the working assembly, and the sensor assembly and a connection relationship with the body, refer to the autonomous working apparatus 100. Details are not described herein again.

In this embodiment, the control circuit is configured to execute a control procedure in some embodiments. When the control procedure is implemented, the autonomous working apparatus implements the following steps:
S100': Obtain position data of an entry position when the autonomous working apparatus enters a working area.
S200': Obtain at least one working parameter when the autonomous working apparatus performs a current working task.
S300': Determine, according to the at least one working parameter, whether a user operation needs to be applied to the autonomous working apparatus, and if a determining result is yes, control the autonomous working apparatus to travel to the entry position to wait for the user operation to be applied.

In the foregoing manner, the position data of the autonomous working apparatus is obtained when the autonomous working apparatus enters the working area in some embodiments, so that the entry position is used as a position at which the user operation is applied to the autonomous working apparatus. In this way, in one aspect, when needing to be operated by a user, the autonomous working apparatus autonomously travels to the entry position in some embodiments. In another aspect, after receiving an operation prompt, the user travels to the entry position in some embodiments, thereby shortening an interaction time and improving working efficiency. In addition, the position data of the entry position is recorded when the autonomous working apparatus enters the working area, and it is not necessary to additionally select another position for interaction, which simplifies steps, and makes it convenient for personnel of a commercial team to place objects such as a carried battery pack near the entry position after entry instead of carrying the objects all the way burdensomely. In addition, when the user controls the autonomous working apparatus to drive into the working area, the entry position of the autonomous working apparatus each time the autonomous working apparatus drives into the working area is random in some embodiments, i.e., the autonomous working apparatus does not need to return to a fixed entry position each time, thereby helping to avoid lawn wear.

In some implementations of this embodiment, when the autonomous working apparatus obtains positioning data with higher accuracy through course calibration near an entry area, a position at which the autonomous working apparatus completes course calibration is alternatively used as the entry position in some embodiments.

In some implementations of this embodiment, the obtained at least one working parameter includes at least one of an execution progress, a driving power, a traveling speed, a workload, a remaining battery level, or a map parameter of the current working task. For example, the execution progress of the current working task is represented by a coverage rate of the working area by the autonomous working apparatus in some embodiments, or is represented by a traveling progress of a planned working path in some embodiments. For example, the map parameter is used for determining an increase or a decrease in a quantity of maps in some embodiments. For example, the map parameter is a quantity of maps, a map receiving progress, a map downloading progress, or the like in some embodiments.

In some implementations of this embodiment, the operation that the autonomous working apparatus waits at the entry position for the user to apply includes changing a battery pack, opening a seat plate to sit, pressing a key to confirm return after a traveling environment is confirmed, manually driving the machine to return, and the like. Based on the foregoing operations, it is beneficial to replenish electricity in time to ensure that a working task is performed smoothly, and provide a relatively safe traveling environment and/or traveling state for the autonomous working apparatus when returning to a transport vehicle, thereby ensuring traveling safety of the autonomous working apparatus and ensuring pedestrian safety.

In another embodiment, an autonomous working apparatus includes a body, a working assembly, a driving assembly, and a sensor assembly that are connected to the body, and a control circuit that is coupled to the working assembly, the driving assembly, and the sensor assembly. For arrangement of components in the driving assembly, the working assembly, and the sensor assembly and a connection relationship with the body, refer to the autonomous working apparatus 100. Details are not described herein again.

In this embodiment, the control circuit is configured to execute a control procedure in some embodiments. When the control procedure is implemented, the autonomous working apparatus implements the following steps:
S100": Obtain position data of a plurality of preset positions, where the autonomous working apparatus waits at the preset positions for a user operation to be applied.
S200": Obtain at least one working parameter when the autonomous working apparatus performs a current working task.
S300": Determine, according to the at least one working parameter, whether a user operation needs to be applied to the autonomous working apparatus, and if a determining result is yes, control the autonomous working apparatus to travel to one preset position in the plurality of preset positions to wait for the user operation to be applied.

In the foregoing manner, the plurality of preset positions are selected in advance as positions at which the user operation is applied to the autonomous working apparatus in some embodiments. In this way, when the autonomous working apparatus needs to be operated by a user, the autonomous working apparatus selects one position from the plurality of preset positions to travel to in some embodiments, i.e., does not need to return to a fixed position each time in some embodiments, thereby helping to avoid lawn wear. In addition, after receiving an operation prompt, the user travels to the selected preset position in some embodiments, thereby helping to shorten an interaction time and improving working efficiency.

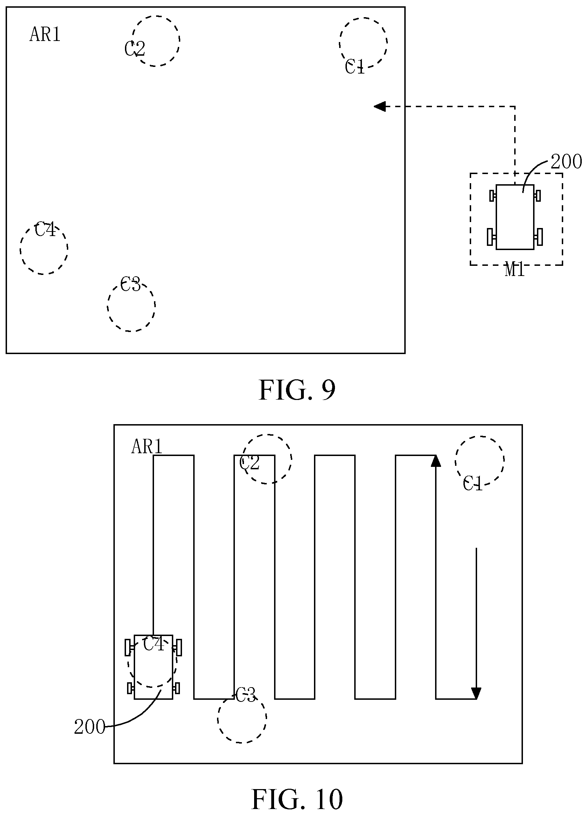

First, the autonomous working apparatus enters a working area to start working. FIG. 9 is used as an example. A plurality of preset positions C1, C2, C3, and C4 are preset in a map of a working area AR1. The plurality of preset positions C1, C2, C3, and C4 are established together when the map of the working area AR1 is established in some embodiments.

After completing the current working task, the autonomous working apparatus travels to one of the preset positions. FIG. 10 is used as an example. After the autonomous working apparatus 200 completes the current working task, the user needs to perform an operation of confirming return/confirming that work is required. In this case, the autonomous working apparatus 200 is just near a preset position C4 and stays at the preset position C4 to wait for the user to come over in some embodiments.

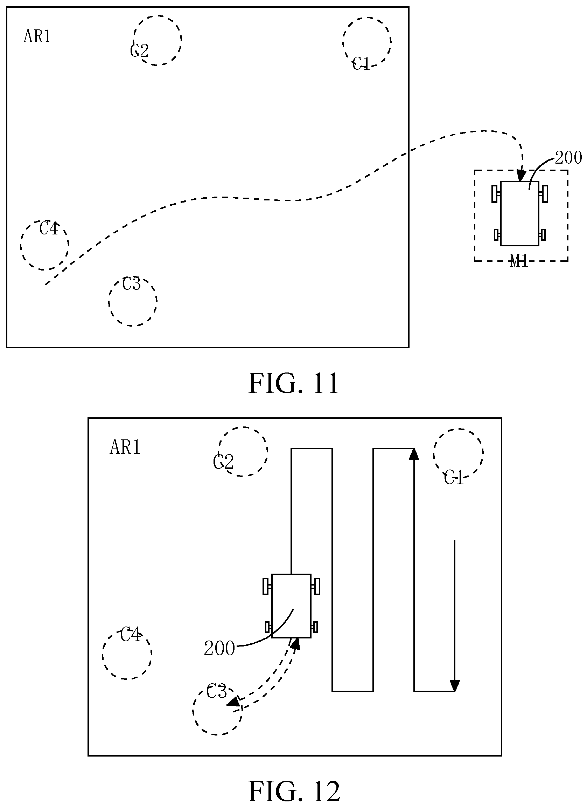

When the user determines that it is not necessary to work again, the user returns to a preset parking position automatically/based on control of the user in some embodiments. FIG. 11 is used as an example. After receiving an instruction for confirming return/confirming that no work is required, the autonomous working apparatus 200 returns to a preset parking position M1 automatically/based on control of the user in some embodiments.

In addition, FIG. 12 is used as an example. In an entire working process, a remaining battery level of the autonomous working apparatus is detected in some embodiments. When it is found that the remaining battery level is excessively low, the autonomous working apparatus 200 chooses to travel to one (for example, the closest preset position C3) of the preset positions to wait for the user to come over to replenish electricity in some embodiments. After the replenishment of electricity is completed, the autonomous working apparatus 200 drives away from the preset position C3 to return to a position at which work is suspended and continue to work until the current working task is completed in some embodiments.

In some implementations of this embodiment, the step of controlling the autonomous working apparatus to travel to one preset position in the plurality of preset positions to wait for the user operation to be applied includes: obtaining position data of a preset position selected by the user in response to a position selection instruction sent by a user terminal, and controlling the autonomous working apparatus to travel to the preset position selected by the user to wait for the user operation to be applied. In other words, when a user operation needs to be applied to the autonomous working apparatus, the user selects a preset position to return to, and the autonomous working apparatus then travels to the preset position selected by the user in some embodiments.

In some implementations of this embodiment, in some embodiments, the step of controlling the autonomous working apparatus to travel to one preset position in the plurality of preset positions to wait for the user operation to be applied includes: obtaining position data of a default preset position in the plurality of preset positions, and controlling the autonomous working apparatus to travel to the default preset position to wait for the user operation to be applied. Optionally, the default preset position is selected in advance by the user in some embodiments, or is determined according to a preset position previously selected by the user in some embodiments.

In some implementations of this embodiment, the obtained at least one working parameter includes at least one of an execution progress, a driving power, a traveling speed, a workload, a remaining battery level, or a map parameter of the current working task. For example, the execution progress of the current working task is represented by a coverage rate of the working area by the autonomous working apparatus in some embodiments, or is represented by a traveling progress of a planned working path in some embodiments. For example, the map parameter is used for determining an increase or a decrease in a quantity of maps in some embodiments. For example, the map parameter is a quantity of maps, a map receiving progress, a map downloading progress, or the like in some embodiments.

In some implementations of this embodiment, the operation that the autonomous working apparatus waits at the entry position for the user to apply includes changing a battery pack, opening a seat plate to sit, pressing a key to confirm return after a traveling environment is confirmed, manually driving the machine to return, and the like. Based on the foregoing operations, it is beneficial to replenish electricity in time to ensure that a working task is performed smoothly, and provide a relatively safe traveling environment and/or traveling state for the autonomous working apparatus when returning to a transport vehicle, thereby ensuring traveling safety of the autonomous working apparatus and ensuring pedestrian safety.

In embodiments of this application, an autonomous working system is provided. The autonomous working system includes the autonomous working apparatus in any one of the foregoing embodiments as well as a terminal and a server.

The terminal is communicatively connected to the autonomous working apparatus. The terminal may also be referred to as user equipment (UE), an access terminal, a mobile device, a user terminal, a terminal, a wireless communication device, a user agent, or a user apparatus. The terminal device in the embodiments of this application may be a device that provides a user with voice and/or data connectivity, a handheld device having a wireless connection function, an in-vehicle device, or the like. The terminal device in the embodiments of this application may be a mobile phone, a tablet computer (Pad), a notebook computer, a palmtop computer, a mobile internet device (MID), a wearable device, or the like.

The server is communicatively connected to the autonomous working apparatus and the terminal, and is configured to store map data of different working areas, to send map data of a working area of a working task to be performed to the autonomous working apparatus and/or the terminal in some embodiments. In some implementations, the server may be a cloud server. In some implementations, the server may be a local server.

In embodiments of this application, a computer-readable storage medium is further provided. The storage medium stores a computer program. The computer program, when being executed, implements steps of the methods in the foregoing embodiments.

It should be understood that, in the embodiments of the present disclosure, a controller may include a processor. The processor may be a general-purpose central processing unit (CPU), another general-purpose processor, a digital signal processor (DSP), an application-specific integrated circuit (ASIC), a field-programmable gate array (FPGA) or another programmable logic device, a discrete gate or transistor logic device, a discrete hardware component, or the like. The general-purpose processor may be a microprocessor, or the processor may be any conventional processor or the like.

A storage apparatus (or referred to as a memory) in the embodiments of this application may include a read-only memory (ROM) and a random access memory (RAM), and provide instructions and data to the processor. A part of the processor may further include a nonvolatile RAM. For example, the processor may further store information of a device type.

During implementation, the foregoing steps may be accomplished by hardware integrated logic circuits or instructions in a software form in the controller. The method for requesting an uplink transmission resource disclosed with reference to the embodiments of the present disclosure may be directly performed and accomplished by a hardware processor or performed and accomplished by a combination of hardware and software modules in a processor. The software module may be stored in a storage medium that is mature in the art, such as a RAM, a flash memory, a ROM, a programmable ROM, an electrically erasable programmable memory, or a register. The storage medium is located in a memory. The controller reads information in the storage and accomplishes the steps in the foregoing method in combination with hardware of the processor. To avoid repetition, details are not described herein again.

It should be understood that, in the embodiments of the present disclosure, "B corresponding to A" indicates that B is associated with A, and B may be determined according to A. However, it should be further understood that determining B according to A does not mean that B is determined according to only A, and B may alternatively be determined according to A and/or other information.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that, in various examples of the present disclosure, sequence numbers of the above processes do not indicate an execution sequence, and an execution sequence of various processes shall be determined by functionalities and intrinsic logics thereof, and shall constitute no limitation on an implementation process of the examples of the present disclosure.

In the several embodiments provided in the present disclosure, it should be understood that the disclosed system, apparatus, and method may be implemented in other forms. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual requirements to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, a process or a function according to the embodiments of the present disclosure is generated completely or partially. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The available medium may be a magnetic medium (for example, a floppy disk, a hard disk or a magnetic tape), an optical medium (for example, a digital versatile disc (DVD)), a semiconductor medium (e.g., solid state disk (SSD)) or the like.

The above descriptions are merely specific implementations of the present disclosure, and the protection scope of the present disclosure is not limited thereto. Any variation or replacement that may be readily figured out by those skilled in the art within the technical scope disclosed by the present disclosure shall fall within the protection scope of the present disclosure. Therefore, the protection scope of the present disclosure shall be defined by the protection scope of the claims.

## Claims

1. A control method for an autonomous working apparatus, the autonomous working apparatus is adapted to perform at least one working task in a working area, **characterized in that** the method comprises:
obtaining at least one working parameter when the autonomous working apparatus performs a current working task;
determining, according to the at least one working parameter, whether the autonomous working apparatus needs to return to a preset parking position located outside the working area, and if a determining result is yes, controlling the autonomous working apparatus to travel to a preset position to wait for a user operation to be applied, wherein the preset parking position is different from the preset position; and
enabling the autonomous working apparatus to return to the preset parking position based on the applied user operation, and switching to a state of waiting to perform a next working task or shutting down.

2. The method according to claim 1, **characterized in that** position data of the preset position comprises position data of an entry position when the autonomous working apparatus enters the working area.

3. The method according to claim 2, **characterized in that** the position data of the entry position comprises position data of a position at which course calibration is completed after the autonomous working apparatus enters the working area.

4. The method according to claim 1, before the autonomous working apparatus performs a working task, further comprising:
obtaining map data of the working area, wherein the map data comprises position data of the preset position.

5. The method according to claim 4, **characterized in that** the obtaining map data of the working area comprises:
acquiring position data of a boundary of the working area and the position data of the at least one preset position; and
generating the map data according to the acquired position data.

6. The method according to claim 4, **characterized in that** the obtaining map data of the working area comprises:
acquiring position data of a boundary of the working area and position data of a guide line or a guide area for guiding the autonomous working apparatus to travel into the working area from outside the working area, wherein the position data of the guide line or the guide area comprises the position data of the at least one preset position; and
generating the map data according to the acquired position data.

7. The method according to claim 1, **characterized in that** the at least one preset position is located inside and/or at a boundary of the working area.

8. The method according to claim 1, **characterized in that** the parking position is located on a moving tool near the working area, and the moving tool is configured to transport the autonomous working apparatus to a different working area to perform a working task.

9. The method according to any one of claims 1 to 8, **characterized in that** the at least one working parameter comprises an execution progress of the current working task.

10. The method according to claim 9, **characterized in that** the enabling the autonomous working apparatus to travel to the preset parking position based on the applied user operation comprises:
receiving an instruction entered by a user to return to the preset parking position; and
controlling the autonomous working apparatus based on the instruction to return to the preset parking position.

11. The method according to claim 9, **characterized in that** the enabling the autonomous working apparatus to travel to the preset parking position based on the applied user operation comprises:
receiving an instruction entered by a user to switch to a manual mode; and
controlling the autonomous working apparatus based on the instruction to switch to the manual mode, wherein in the manual mode, the autonomous working apparatus returns to the preset parking position based on control of the user.

12. The method according to claim 9, **characterized in that** the at least one working parameter further comprises a remaining battery level of the autonomous working apparatus, and the method further comprises:
determining, according to the remaining battery level of the autonomous working apparatus, whether the autonomous working apparatus needs to replenish electricity, and if a determining result is yes, controlling the autonomous working apparatus to travel to the at least one preset position to wait for the user to replenish electricity.

13. The method according to claim 12, **characterized in that** the method further comprises:
receiving an instruction entered by the user to end replenishment of electricity; and
controlling the autonomous working apparatus based on the instruction to drive away from the at least one preset position and continue to perform the current working task.

14. A control method for an autonomous working apparatus, the autonomous working apparatus is adapted to perform at least one working task in a working area, **characterized in that** the method comprises:
obtaining position data of an entry position when the autonomous working apparatus enters the working area;
obtaining at least one working parameter when the autonomous working apparatus performs a current working task; and
determining, according to the at least one working parameter, whether a user operation needs to be applied to the autonomous working apparatus, and if a determining result is yes, controlling the autonomous working apparatus to travel to the entry position to wait for the user operation to be applied.

15. A control method for an autonomous working apparatus, the autonomous working apparatus is adapted to perform at least one working task in a working area, **characterized in that** the method comprises:
obtaining position data of a plurality of preset positions, wherein the autonomous working apparatus waits at the preset positions for a user operation to be applied;
obtaining at least one working parameter when the autonomous working apparatus performs a current working task; and
determining, according to the at least one working parameter, whether a user operation needs to be applied to the autonomous working apparatus, and if a determining result is yes, controlling the autonomous working apparatus to travel to one preset position in the plurality of preset positions to wait for the user operation to be applied.

16. The method according to claim 15, **characterized in that** the controlling the autonomous working apparatus to travel to one preset position in the plurality of preset positions to wait for the user operation to be applied comprises:
obtaining position data of a preset position selected by a user from the plurality of preset positions in response to a position selection instruction sent by a user terminal, and controlling the autonomous working apparatus to travel to the preset position selected by the user to wait for the user operation to be applied.

17. The method according to claim 15, **characterized in that** the controlling the autonomous working apparatus to travel to one preset position in the plurality of preset positions to wait for the user operation to be applied comprises:
obtaining position data of a default preset position in the plurality of preset positions, and controlling the autonomous working apparatus to travel to the default preset position to wait for the user operation to be applied.

18. An autonomous working apparatus, **characterized in that** the autonomous working apparatus is adapted to perform at least one working task in a working area, and comprises: a body; and a working assembly, a driving assembly, and a sensor assembly that are connected to the body, wherein the sensor assembly is at least configured to obtain positioning data of the autonomous working apparatus, wherein
the autonomous working apparatus further comprises a control circuit, the control circuit is coupled to the working assembly, the driving assembly, and the sensor assembly, and is configured to perform a control process, and the control process comprises:
obtaining at least one working parameter when the autonomous working apparatus performs a current working task;
determining, according to the at least one working parameter, whether the autonomous working apparatus needs to return to a preset parking position located outside the working area, and if a determining result is yes, controlling the autonomous working apparatus to travel to a preset position to wait for a user operation to be applied, wherein the preset parking position is different from the preset position; and
enabling the autonomous working apparatus to return to the preset parking position based on the applied user operation, and switching to a state of waiting to perform a next working task or shutting down.

19. An autonomous working system, comprising:
the autonomous working apparatus according to claim 18;
a terminal, communicatively connected to the autonomous working apparatus; and
a server, communicatively connected to the autonomous working apparatus and the terminal, and configured to store map data of different working areas, to send map data of a working area of a working task to be performed to the autonomous working apparatus and/or the terminal.

20. A computer-readable storage medium, **characterized in that** the storage medium stores a computer program, and the computer program, when being executed, implements steps of the method according to any one of claims 1 to 17.
